# EUROPÄISCHE PATENTSCHRIFT

(11) **EP 1 320 776 B1**
(45) Veröffentlichungstag und Bekanntmachung des Hinweises auf die Patenterteilung: **18.08.2004**
(21) Anmeldenummer: 00979384.5
(22) Anmeldetag: 25.09.2000
(51) Int. Cl.: G02B 6/255, C03B 37/15

(54) **LICHTWELLENLEITERSPLEISSGERÄT ZUR STOFFSCHLÜSSIGEN VERBINDUNG VON OPTISCHEN FASERN**
OPTICAL WAVEGUIDE SPLICER FOR LINKING OPTICAL FIBERS IN A MATERIAL FIT
MACHINE D'EPISSURAGE POUR GUIDES D'ONDES OPTIQUES POUR LE RACCORDEMENT DE FIBRES OPTIQUES PAR LIAISON DE MATIERE

(43) Veröffentlichungstag der Anmeldung: 25.06.2003
(73) Patentinhaber: CCS Technology, Inc., Wilmington, DE 19803 (US)
(72) Erfinder: KOSSAT, Rainer, 83229 Aschau (DE); ZIMMER, Frank, 86937 Scheuring (DE)
(74) Vertreter: Epping Hermann & Fischer
(86) Internationale Anmeldenummer: PCT/DE2000/003330
(87) Internationale Veröffentlichungsnummer: WO 2002/027368

(56) Entgegenhaltungen:
- AU-B- 681 921
- CH-A- 643 217
- US-A- 4 906 810
- US-A- 5 222 171
- US-A- 5 717 813
- PATENT ABSTRACTS OF JAPAN vol. 010, no. 202 (P-477), 15. Juli 1986 (1986-07-15) -& JP 61 045203 A (NIPPON TELEGR & TELEPH CORP), 5. März 1986 (1986-03-05)
- PATENT ABSTRACTS OF JAPAN vol. 001, no. 085 (E-034), 9. August 1977 (1977-08-09) -& JP 52 020843 A (NIPPON TELEGR & TELEPH CORP), 17. Februar 1977 (1977-02-17)
- PATENT ABSTRACTS OF JAPAN vol. 007, no. 278 (P-242), 10. Dezember 1983 (1983-12-10) -& JP 58 154813 A (NIPPON DENSHIN DENWA KOSHA), 14. September 1983 (1983-09-14)

## Beschreibung

Die Erfindung betrifft ein Lichtwellenleiterspleißgerät zur stoffschlüssigen Verbindung von optischen Fasern mit einer Einrichtung zum Annähern der Enden von zwei Fasern, einer Positioniereinrichtung zum achsengleichen Ausrichten der Enden der optischen Fasern sowie mit Elektroden zur Erzeugung einer elektrischen Glimmentladung für die Verschweißung der Enden der optischen Fasern.

Es ist eine Vielzahl von Lichtwellenleiterspleißgeräten bekannt, mit deren Hilfe die Enden von optischen Fasern durch "thermisches Schweißen"' miteinander verbunden werden. Diese dabei angewandten Verfahren eignen sich sowohl für Einmodenoder Mehrmoden-Glasfasern als auch für Glasfaserbändchen. Die stoffschlüssige Verbindung der Enden der Fasern erfolgt dabei durch Erhitzung und Verschmelzung mittels Glimmentladung, die zwischen zwei Elektroden stattfindet. Bei der Erstellung von Lichtwellenleiternetzen ist eine erhebliche Anzahl von Verbindungen herzustellen, so daß für diese Montagearbeiten entsprechende Lichtwellenleiterspleißgeräte entwickelt wurden. Mit deren Hilfe werden nun die für das Verbinden erforderlichen Verfahrensschritte wie das Annähern der zu verbindenden Enden der optischen Fasern, deren Positionierung und Ausrichtung und schließlich das eigentliche Verschweißen koordiniert und in eigens hierfür konzipierten Lichtwellenleiterspleißgeräten zusammengefaßt. Außerdem sind in diesen Geräten auch geeignete Beleuchtungs- und Beobachtungseinrichtungen eingesetzt, mit deren Hilfe der Ablauf des Verfahrens verfolgt werden kann.

Derartige Lichtwellenleiterspleißgeräte sind beispielsweise aus nachfolgend genannter Literatur zu entnehmen:
telekom report 19 (1956), Heft 1; Seiten 39 - 42
telekom report 18 (1995), Heft 3; Seiten 136 - 139
telekom report 13 (1990), Heft 2; Seiten 62 - 65
telekom report 9 (1986), Heft 3; Seiten 197 - 201
ICCS and Future-Link; Katalog 1998; Siemens-Communication-Cable Networks; Seiten 107 - 116
DE 42 35 924 - C2, JP 61 045 203

Die Dämpfung einer mit einem solchen Lichtwellenleiterspleißgerät hergestellten Spleißverbindung hängt von der exakten Ausrichtung der Licht führenden Faserkerne, der Qualität der Faserendflächen und von den entsprechend gewählten Schweißparametern ab. So werden in der thermischen Verbindungstechnik Lichtwellenleiter bzw. Licht-Wellenleiter-Fasern (im folgenden kurz als "Faser" bezeichnet) miteinander verschweißt, indem man zwei exakt zueinander ausgerichtete Faserenden auf Schmelztemperatur erhitzt. Im viskosen Zustand werden dann die beiden Enden der Fasern ineinandergefahren, so daß es zur gegenseitigen Verschmelzung der Enden der Fasern kommt und dabei thermisch miteinander verbunden werden. Die Fasererwärmung erfolgt durch eine Glimmentladung, die sich nach dem Zünden zwischen zwei Elektroden aufbaut.

Das angestrebte Ziel der thermischen Verbindungstechnik ist, Spleißverbindungen mit möglichst geringen Dämpfungswerten herzustellen. Mit modernen Spleißgeräten sind heute unter günstigen Bedingungen mittlere Dämpfungswerte von unter 0,02 dB möglich. Damit diese geringen Dämpfungen jedoch realisiert werden können, sind neben exakt vorbereiteten Faserendflächen auch präzise eingestellte Parameter, sogenannte Spleißparameter, nötig. Wichtige Spleißparameter sind der Schweißstrom, die Schweißzeit und der Vorschub, mit dem die Enden der Fasern aufeinander geschoben werden. Der perfekt eingestellte Schweißstrom bewirkt, daß sich bei der Erwärmung durch die elektrische Glimmentladung eine optimale Viskosität der Faserenden ergibt, so daß sich beim Zusammenspiel mit der eingestellten Schweißzeit und dem eingestellten Vorschub Spleißverbindungen mit sehr geringen Dämpfungen ergeben. Nur bei optimalen äußeren Bedingungen (bei Windstille, normaler Luftfeuchtigkeit und Raumtemperatur und gleichbleibendem Luftdruck und weiteren Parametern) und bei perfektem Zustand des Spleißgerätes können optimale Spleißergebnisse erzielt werden. Dabei spielt auch eine besondere Rolle, daß keine Verschmutzung der Elektroden und der Faserführungen vorliegt.

Bei längerem Gebrauch des Lichtwellenleiterspleißgerätes kommt es jedoch aufgrund von Materialdiffusionen während des Spleißprozesses doch zu einer gewissen Verschmutzung und zu einem Abbrand der Elektroden. An der Verschmutzungsstelle ergibt sich dadurch lokal eine höhere Impedanz, so daß die Glimmentladung an dieser Stelle ausweicht, das heißt die Glimmentladung baut sich nicht mehr gleichmäßig um die Elektrodenspitze herum auf. Beim nächsten Spleißvorgang kommt es dann neben der neuerlichen Materialdiffusion auch zu einer Verdampfung der alten Verschmutzung, die sich dann ebenfalls wieder auf den Elektroden niederschlägt. Daraus ist ersichtlich, daß sich im Laufe der Zeit sehr variable Zustände an den Elektroden ergeben, die den Zustand der Glimmentladung unkontrollierbar verändern können. Die Glimm- entladung steht dann unter Umständen auch nicht mehr stabil zwischen beiden Elektroden und es kommt zu einem Flackern der Glimmentladung. Eine weitere Ursache für eine instabile Glimmentladung kann auch die Oberflächenbeschaffenheit der Elektrodenspitzen sein. Eine rauhe und nicht rotations- symmetrisch geformte Elektrodenspitze kann aufgrund der beim Spleißprozeß entstehenden thermischen Luftbewegung ebenfalls zu einer flackernden Glimmentladung führen. Dadurch kommt es zu einer unregelmäßigen und nicht reproduzierbaren Fasererwärmung. Die Folge davon ist, daß die Qualität der Faserverbindungen unter Umständen sehr stark schwanken kann. Bei dem Flackern der Glimmentladung kann es somit vorkommen, daß der Bereich der größten Erwärmung sich oberhalb oder unterhalb der Spleißstelle ausbildet, so daß die ursprünglich erwartete Erwärmung an den Enden der Fasern nicht erreicht oder zeitlich nicht immer erreicht wird. Bei der Betrachtung in Faserlängsrichtung führt somit eine instabile Glimmentladung zu einer Erwärmung eines im Vergleich zur Erwärmung mit sauberen Elektroden größeren Faserbereichs. Durch diese Abweichungen kommt es bei unverändertem Schweißstrom zu einer ungleichmäßigen Fasererwärmung an der Spleißstelle, was einen undefinierten Materialfluß zur Folge hat. Dies führt zu einer Verschlechterung des Spleißdämpfungsergebnisses. Neben der Elektrodenverschmutzung kann eine flackernde Glimmentladung auch durch Windbeeinflussung entstehen, wodurch auch in diesem Fall die vorher genannten Probleme auftreten können. Weiterhin können durch den Abbrand der Elektroden Veränderungen der elektrischen Glimmentladungentstehen, da sich dabei der Abstand der Elektroden vergrößert.
Bei den derzeitigen thermischen Spleißgeräten sind die Elektroden und die Umgebung der Glimmentladung völlig offen, so daß die Glimmentladung voll den Umgebungsbedingungen ausgesetzt ist. Bei diesen Geräten ist die Vermeidung einer instabilen Glimmentladung nur dadurch zu beheben, daß die Elektroden stets gereinigt bzw. erneuert werden. Eine andere Möglichkeit zur Vermeidung der Instabilität wäre eine Anpassung des Schweißstromes, so daß die Fasertemperatur an der Spleißstelle wieder der idealen Temperatur entspricht. Dies ist allerdings sehr zeitaufwendig und führt nur bedingt zu einer Verbesserung der Spleißergebnisse, da durch das nicht reproduzierbare Flackern der Glimmentladung ständig sich ändernde Temperaturverhältnisse an der Spleißstelle einstellen. Außerdem ist es nicht möglich, die Auswirkung der asymmetrischen Fasererwärmung durch derartige Maßnahmen zu beseitigen.

Der vorliegenden Erfindung liegt nun die Aufgabe zugrunde, die Glimmentladung bei der thermischen Spleißung von optischen Fasern in Lichtwellenleiterspleißgeräten zu stabilisieren. Die gestellte Aufgabe wird nun mit einem Lichtwellenleiterspleißgerät der eingangs erläuterten Art dadurch gelöst, daß eine Glimmentladungsführung im Bereich der Glimmentladung die Elektroden umgebend angeordnet ist.

Entscheidender Vorteil gegenüber dem Stand der Technik ist nun, daß bei der erfindungsgemäßen Ausbildung des Glimmentladungsbereiches eine Glimmentladungsführung angebracht wird, mit der die Elektroden und auch die Glimmentladung vor den umgebenden Einflüssen weitestgehend geschützt werden. Diese Glimmentladungsführung besteht im wesentlichen aus einem umgebenden Rohr oder Profilkörper, in dessen innerem Hohlraum die Glimmentladung aufgebaut wird. Hierfür werden beispielsweise zwei kleine Röhrchen zwischen den beiden Elektroden in die Glimmentladungsstrecke eingebracht, so daß die Glimmentladung bis auf den unmittelbaren Bereich an den zu verbindenden Enden der optischen Fasern eine Führung innerhalb der Röhrchen erfolgt. Die Dimensionierung der Röhrchendurchmesser muß so sein, daß sich bei sauberen, nicht flackernden Elektroden an den Enden der Fasern annähernd die gleichen Temperaturverhältnise einstellen wie ohne Röhrchen, das heißt die Glimmentladung muß sich in jedem Fall ungehindert ausbreiten können. Wie bereits erwähnt, ergeben sich bei einer flackernden Glimmentladung jeweils kurzfristig Richtungsänderungen der Glimmentladung, die zu den beschriebenen Unregelmäßigkeiten führen. Eine derartige Ablenkung oder Auslenkung wird bei der erfindungsgemäßen Maßnahme aufgrund der räumlichen Führung der elektrischen Glimmentladung im Bereich der Elektroden verhindert. Dies führt dazu, daß auch bei einer lokalen Ablenkung in Elektrodennähe die Lichtbogenposition an der Spleißstelle konstant bleibt. Außerdem ist durch den Einsatz der Glimmentladungsführung von Vorteil,daß es zu weniger Abbrand der Elektroden kommt und daß der sich bei Abbrand vergrößernde Elektrodenabstand im Bereich der Schweißstelle aufgrund der Glimmentladungsführung nicht in Erscheinung tritt.

Als Material für die Lichtbogenführung eignet sich ein elektrisch nicht leitendes, möglichst wenig thermisch leitendes Material, das außerdem hitze-, ozon- und UV-beständig sein muß. Besonders geeignet hierfür ist deshalb Keramik- oder Quarzglasmaterial.

Als Glimmentladungsführungen im Sinne der Erfindung kann auch ein durchgehendes Röhrchen zwischen den Elektroden verwendet werden, wobei dann im Bereich der Verbindungsstelle der optischen Fasern entsprechende Aussparungen für die Einführung der Enden der Fasern und entsprechende Beobachtungskanäle für die Überwachung des Spleißprozesses vorgesehen werden. Hier ergibt sich ein zusätzlicher Vorteil, da die Glimmentladung über einen weitaus größeren Bereich geführt wird. Damit läßt sich also eine noch bessere Stabilisierung der elektrischen Glimmentladung herbeiführen.

Als weiteres Ausführungsbeispiel für eine Glimmentladungsführung gemäß der Erfindung ergibt sich bei der Verwendung eines durchgehenden Röhrchens, daß in Längsrichtung so geteilt ist, daß sich zwei ergänzende Längsteile ergeben. Zweckmäßig ist, das Röhrchen in zwei gleiche Hälften längsseitig zu teilen. Dabei ist von Vorteil, wenn der unten liegende Teil des Röhrchens fest im Spleißgerät bzw. der Funkenstrecke des Spleißgerätes fixiert ist und der oben liegende Teil klappbar aufgesetzt werden kann. Es ist dabei vorteilhaft, den oberen Teil mit der Elektrodenklappe der Funkenstrecke zu vereinen, so daß nur ein Klappvorgang vonnöten ist. Auch hier müssen im Bereich der Verbindungsstelle entsprechende Aussparungen für die Einführung der Enden der Fasern und für die Beobachtung vorgesehen werden. Der Vorteil dieser Ausführungsform liegt darin, daß die Glimmentladung ebenfalls über einen größeren Bereich geschützt geführt wird und daß die zu verbindenden Enden der Fasern an der Verbindungsstelle wesentlich leichter eingeführt werden können. Außerdem ist hier bei dem aufgeklappbaren Röhrchen die mechanische Reinigung der Elektroden wesentlich einfacher.

Eine zusätzliche Verbesserung der Glimmentladungsstabilität kann erreicht werden, wenn die erforderlichen Aussparungen im Bereich der Verbindungsstelle zusätzlich mit einer abnehmbaren Abdeckung abgeschlossen werden, wobei nur noch die winzigen Beobachtungskanäle und Einführungsöffnungen zur Umgebung offen bleiben. Zweckmäßig ist auch hier, daß die Abdeckung mit der Elektrodenklappe vereint wird, so daß nur eine einzige Klappmaßnahme durchgeführt werden muß.

Die Erfindung wird nun anhand von acht Figuren näher erläutert.
- Figur 1: zeigt die Verschweißung von optischen Fasern bei idealen Verhältnissen.
- Figur 2: zeigt zwei Zustände der flackernden elektrischen Glimmentladung bei der Verschweißung von optischen Fasern.
- Figur 3: zeigt die erfindungsgemäße Glimmentladungsführung bei der Verschweißung von optischen Fasern in Querschnittdarstellung.
- Figur 4: vermittelt die erfindungsgemäße Ausführung nach Figur 3 in perspektivischer Darstellung.
- Figur 5: zeigt eine zylindrische Glimmentladungsführung mit einer Aussparung im Verbindungsbereich.
- Figur 6: zeigt eine Glimmentladungsführung aus einem rechteckigen Hohlprofil oder in Schichtbauweise.
- Figur 7: zeigt eine Funkenstrecke eines Lichtwellenleiterspleißgerätes mit eingebauter Glimmentladungsführung.
- Figur 8: zeigt ein Diagramm über Dämpfungsmessungen.

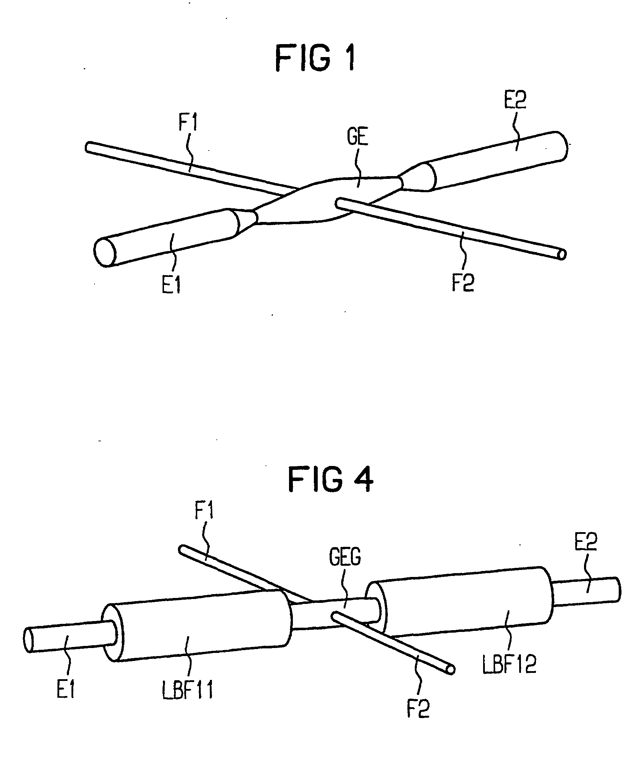

Figur 1 vermittelt den Zustand während des Schweißvorganges bei der Verbindung von zwei Enden optischer Fasern F1 und F2. Die Verbindungsstelle liegt bei diesen Verhältnissen genau im Zentrum der Glimmentladung GE, die sich zwischen den beiden Elektroden E1 und E2 ausbildet. Bei diesen gezeigten Verhältnissen liegt eine gleichmäßige Wärmeverteilung an den Enden der optischen Fasern F1 und F2 vor, so daß die Voraussetzungen für eine einwandfreie Verbindung gegeben sind.

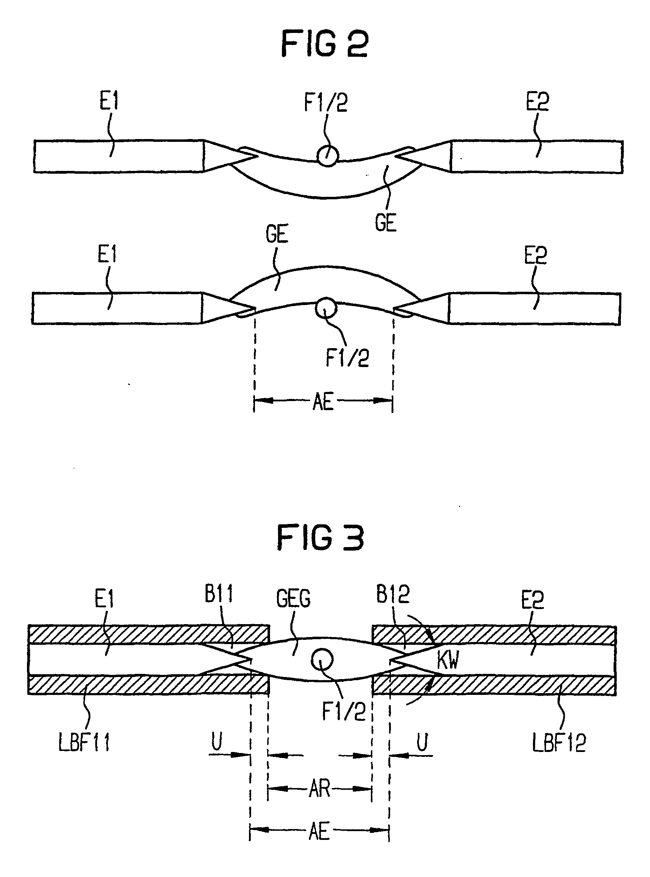

In Figur 2 sind zwei Fälle ungleicher Wärmeverteilung bei einer flackernden Glimmentladung GE gezeigt. Im oberen Teil dieser Figur ist die Glimmentladung GE zwischen den Elektroden E1 und E2 gerade nach unten ausgelenkt, so daß die Enden der Fasern F1/2 nur im unteren Bereich von der Glimmentladung GE erhitzt werden, während die oberen Teile der Enden nicht erfaßt werden und deshalb geringere Temperatur aufweisen. Durch diese Temperaturschwankungen während des Schweißvorganges in diesem Bereich treten schwankende Verhältnisse auf, die unter anderem zu einer Erhöhung der Dämpfung im Verbindungsbereich der Faser führen. Da dieses Flackern der Glimmentladung GE aber auch nicht gleichmäßig ist, sind keine reproduzierbaren Ergebnisse und Korrekturen möglich. Es ergibt sich deshalb eine große Schwankungsbreite bezüglich der Güte der Verbindungsstellen. Wie bereits erläutert, kann das Flakkern der Glimmentladung GE zum Beispiel durch Luftbewegungen oder auch durch Verschmutzung oder durch Abbrand der Elektroden entstehen, wobei sich der Verschmutzungsgrad infolge der Temperaturbelastung und Abnutzungserscheinungen ständig ändern kann.

Figur 3 verdeutlicht nun den erfindungsgemäßen Einsatz einer Glimmentladungsführung LBF11/LBF12, die in diesem Fall durch zwei voneinander getrennte Röhrchen LBF11 und LBF12 gebildet wird. Diese Röhrchen LBF11 und LBF12 haben einen Innenduchmesser, der dem Außendurchmesser von ca. 1 bis 2,5 mm der Elektroden E1 und E2 entspricht, so daß diese auf die Elektroden E1 und E2 aufgeschoben und fixiert werden können. Dabei werden die Röhrchen LBF11 und LBF12 jeweils mit einem Überstand von ca. 0,5 mm auf den Elektroden E1 bzw. E2 positioniert. Der Elektrodenabstand AE beträgt vorzugsweise 2,5 mm und der Abstand AR zwischen den Röhrchen LBF11 und LBF12 beträgt vorzugsweise 1 bis 2 mm, vorzugsweise 1,5 mm. Die Wandstärke der Röhrchen LBF11 bzw. LBF12 beträgt 1 bis 2,5 mm. Die Elektroden E1 und E2 können mit kegelig verlaufenden Spitzen versehen, wobei der Kegelwinkel KW vorzugsweise 30° beträgt.Durch die stabilisierende Wirkung der Glimmentladungsführungen kann aber auch auf solche Spitzen verzichtet werden,was ohne Glimmentladungsführungen nicht möglich wäre. Dadurch können wesentlich preiswertere Elektroden verwendet werden. Die elektrische Glimmentladung erfolgt zwischen den beiden Elektroden E1 und E2, wobei ein Teil der elektrischen Glimmentladung GEG zwischen den beiden Glimmentladungsführungen LB11 und LB12 geschützt und geführt wird.

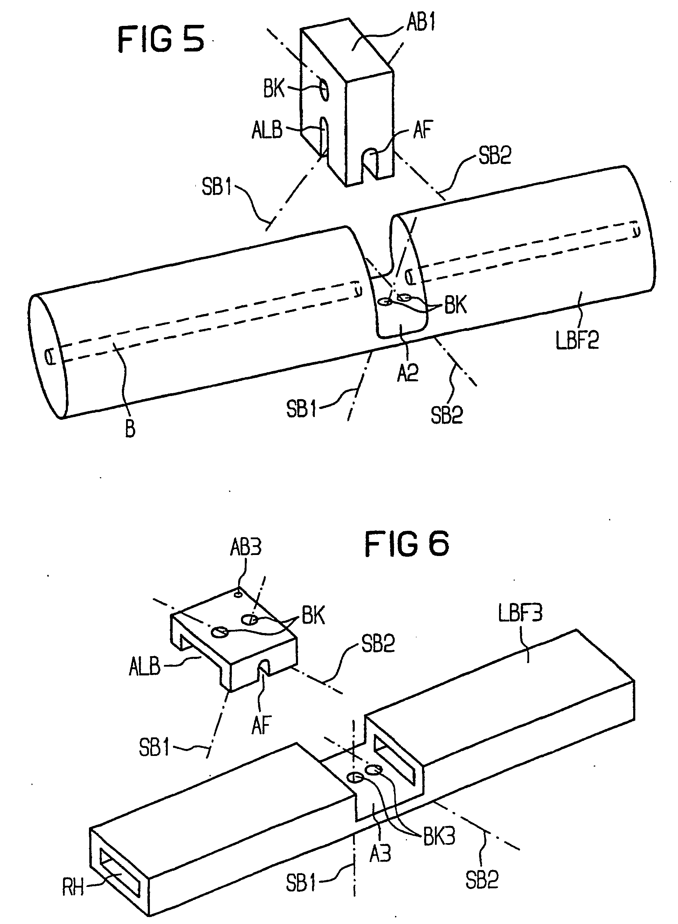

Figur 4 verdeutlicht die Anordnung der Elektroden E1 und E2 mit den aufgesetzten Glimmentladungsführungen LBF11 und LBF12 sowie der Enden der optischen Fasern F1 und F2 während des Schweißvorganges in perspektivischer Ansicht. Dabei ist dargestellt, daß die Glimmentladung GEG nun aufgrund der Glimmentladungsführungen LBF11 und LBF12 geführt bzw. geschützt ist, das heißt die Form der Glimmentladung GEG kommt der Idealform gleich bzw. so nahe, so daß in der Verbindungsstelle konstante und optimale Verhältnisse zum Schweißen der beiden Enden der optischen Fasern F1 und F2 vorliegen.

In Figur 5 wird ein zweites Ausführungsbeispiel für eine Glimmentladungsführungführung LBF2 gemäß der Erfindung dargestellt. Hier handelt es sich um ein durchgehendes zylindrisches Röhrchen, das mit einer axialen Längsbohrung B versehen ist. Im Mittelbereich ist eine Aussparung A2 quer zur Längsachse eingebracht, die sich bis unterhalb der Bohrung B erstreckt. Diese Aussparung ist 1 bis 2 mm, vorzugsweise 1,5 mm breit und in ihr werden die beiden zu verbindenden Enden der optischen Fasern quer zur Längsachse zugeführt. Die beiden Elektroden der Funkenstrecke werden von beiden Seiten her in die Bohrung B eingeführt und den vorgegebenen Umständen entsprechend im Abstand voneinander fixiert. Die zwischen den beiden Elektroden sich ausbildende Glimmentladung wird somit durch die Lichtbogenführung BF2 geschützt geführt, so daß sich in der Aussparung nahezu wieder ideale Glimmentladungsverhältnisse für die Verschweißung einstellen. Da diese Glimmentladungsführung LBF2 als durchgehendes Röhrchen ausgebildet ist, müssen im Verbindungsbereich, das heißt in der Aussparung A2 geeignete Beobachtungs- bzw. Beleuchtungskanäle BK eingebracht werden, damit die Ausrichtung der Fasern und der anschließende Schweißvorgang über entsprechende optische Elemente beobachtet werden kann. Durch die strichpunktierten Linien sind die entsprechenden Strahlengänge SB1 und SB2 angedeutet. Weiterhin ist in dieser Figur eine Abdeckung A1 dargestellt, die gegebenenfalls in bzw..über die Aussparung A2 gesetzt werden kann, um einen noch weitergehenden Schutz der Verbindungsstelle während des Schweißvorganges zu erhalten. Diese Abdeckung muß dann mit Ausschnitten LB für die Glimmentladung und Ausschnitten AF für die quer dazu eingebrachten Fasern, sowie mit Beobachtungs- bzw. Beleuchtungskanälen BK versehen sein. Auch hier sind die Strahlengänge SB1 und SB2 angedeutet.

In Figur 6 ist ein Ausführungsbeispiel gemäß der Erfindung für eine durchgehende Glimmentladungsführung LBF3 dargestellt, der ein Hohlprofil mit rechteckigem Hohlraum RH zugrundeliegt. Auch hier ist wiederum in der Verbindungsstelle eine Aussparung A3 eingebracht, so daß hier die seitliche Einführung der Enden der optischen Fasern erfolgen kann. Die Elektroden sind im rechteckförmigen Hohlraum HR untergebracht. Auch hier sind Beleuchtungs- und Beobachtungskanäle BK3 vorgesehen und die Strahlengänge SB1 und SB2 sind angedeutet. Die Aussparung A3 kann auch hier bei Bedarf mit einer Abdeckung A3 zur besseren Führung der Glimmentladung abgedeckt werden, wobei auch hier entsprechende Ausschnitte ALB und AF, sowie Beleuchtungs- und Beobachtungskanäle BK vorhanden sein müssen.
Die Elektroden können z.B. auch im Material der Glimmentladungsführungen eingebettet bzw. eingegossen sein.

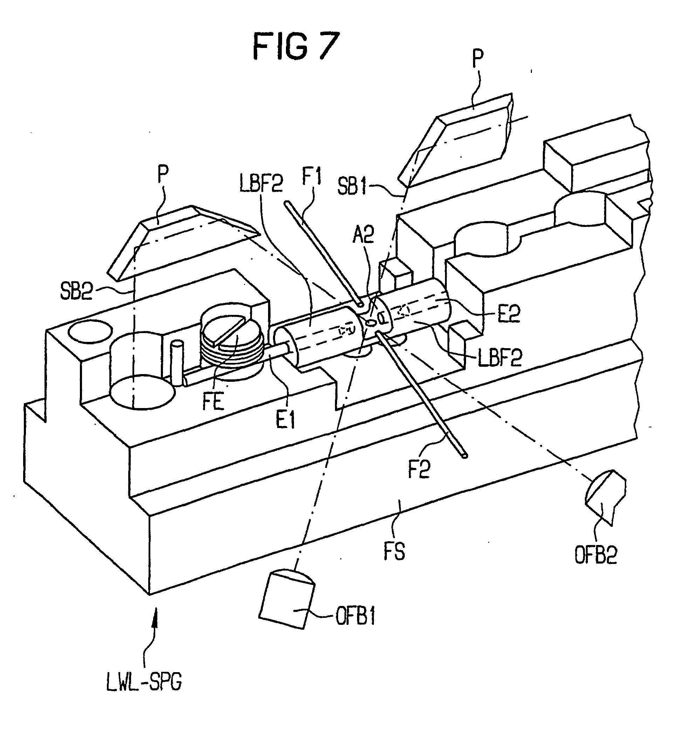

In Figur 7 ist als Ausschnitt aus einem an sich bekannten Lichtwellenleiterspleißgerät LWL-SPG eine Funkenstrecke FS dargestellt, in der erfindungsgemäß eine Glimmentladungsführung LBF2 im Breich der Verbindungsstelle eingesetzt ist. Dabei handelt es sich in diesem Fall um die Glimmentladungsführung LB2, die in Figur 5 bereits näher erläutert wurde. Es ist jedoch der weitere Zusammenhang in diesem Bereich des Lichtwellenleiterspleißgerätes LWL-SPG erkennbar, insbesondere die mehrfach erwähnten aber an sich bekannten Beleuchtungs- und Beobachtungsstrahlengänge SB1 und SB2. Über entsprechende Sender, Prismen P und entsprechende optische Empfänger OFB1 und OFB2 im Zusammenspiel mit den Beleuchtungsund Beobachtungskanälen der Glimmentladungsführung LBF2 ist eine korrekte Ausleuchtung und Beobachtung im Verbindungsbereich möglich. Die beiden zu verbindenden Enden der Fasern F1 und F2 werden senkrecht zur Achse der beiden Elektroden E1 und E2 in die Aussparung A2 eingeführt und mit entsprechendem Vorschub in der ausgebildeten Glimmentladung bis zur gegenseitigen Verschmelzung zusammengeführt. Aufgrund des Schutzes und der Führung der Glimmentladung sind nun Verbindungen von Fasern bei nahezu gleichbleibenden Verhältnissen möglich, so daß stets gleichbleibende und reduzierbare Güte gewährleistet werden kann.

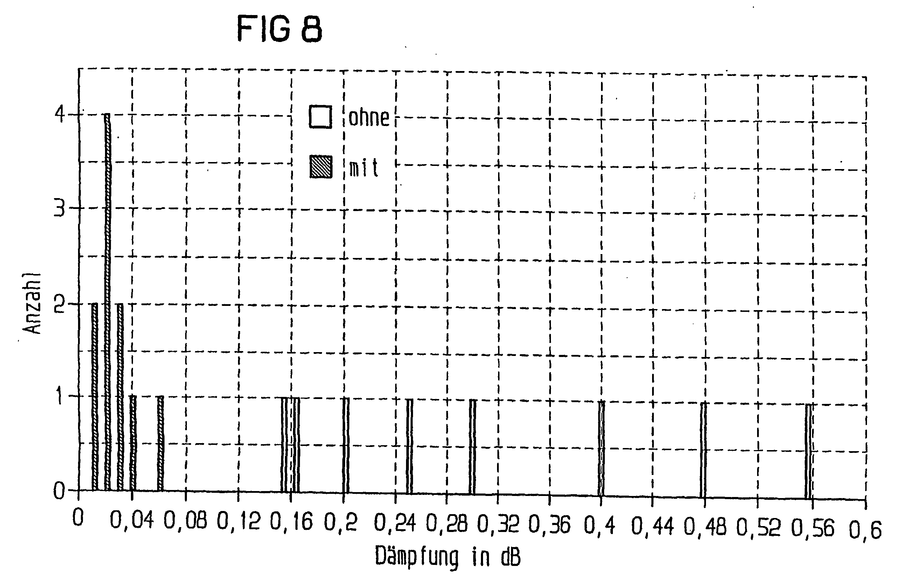

In Figur 8 sind Meßergebnisse über Dämpfungen bei Verbindungen von Fasern in einem Diagramm dargestellt. Daraus ist zu erkennen, daß Spleiße, die ohne Glimmentladungsführung (offene Balkendarstellung) durchgeführt wurden, wesentlich höhere Dämpfungswerte aufweisen und daß der Streubereich sehr groß ist. Bei Spleißen, die mit einer Glimmentladungsführung gemäß der Erfindung (geschlossene Balkendarstellung) durchgeführt wurden, ergeben sich wesentlich kleinere Dämpfungswege, die auch sehr nahe beieinander liegen. Dies ist eindeutig darauf zurückzuführen, daß die Verhältnisse an den Elektroden und im Glimmentladungsbereich durch die erfindungsgemäße Glimmentladungsführung verbessert worden sind.

## Patentansprüche

1. Lichtwellenleiterspleißgerät zur stoffschlüssigen Verbindung von optischen Fasern mit einer Einrichtung zum Annähern der Enden von zwei Fasern (F1, F2), einer Positioniereinrichtung zum achsengleichen Ausrichten der Enden der optischen Fasern sowie mit Elektroden zur Erzeugung einer elektrischen Glimmentladung für die Verschweißung der Enden der optischen Fasern, bei dem eine Glimmentladungsführung (LBP11/12, LBF2, LBF3) im Bereich der Glimmentladung (GE, GEG) die Elektroden (E1, E2) umgebend angeordnet ist,
**dadurch gekennzeichnet,**
**daß** die Glimmentladungsführung (LBF11/12) von zwei getrennten Röhrchen (LBF11, LBF12) gebildet wird, wobei auf jeder Elektrode (E1, E2) jeweils ein Röhrchen (LBF11, LBF12) mit einem das jeweilige Ende der Elektrode (E1, E2) überragenden Überstand (U) aufgesetzt und fixiert ist.

2. Lichtwellenleiterspleißgerät zur stoffschlüssigen Verbindung von optischen Fasern mit einer Einrichtung zum Annähern der Enden von zwei Fasern (F1, F2), einer Positioniereinrichtung zum achsengleichen Ausrichten der Enden der optischen Fasern sowie mit Elektroden zur Erzeugung einer elektrischen Glimmentladung für die Verschweißung der Enden der optischen Fasern, bei dem eine Glimmentladungsführung (LBF11/12, LBF2, LBF3) im Bereich der Glimmentladung (GE, GEG) die Elektroden (E1, E2) umgebend angeordnet ist,
**dadurch gekennzeichnet,**
**daß** die Glimmentladungsführung ein Röhrchen aufweist, das in Längsrichtung so geteilt ist, daß sich zwei ergänzende Längsteile ergeben, wobei das untere Längsteil des Röhrchens im Lichtwellenleiterspleißgerät fixiert ist und das obere Längsteil des Röhrchens, vorzugsweise in Verbindung mit einer Klappvorrichtung des Lichtwellenleiterspleißgerätes, auf das untere Längsteil des Röhrchens aufsetzbar ist.

3. Lichtwellenleiterspleißgerät nach einem der vorhergehenden Ansprüche,
**dadurch gekennzeichnet,**
**daß** Beobachtungskanäle (BK) in der Glimmentladungsführung (LBF2, LBF3) zur optischen Überwachung des Spleißprozesses im Bereich der Faserverbindungsstelle angeordnet sind.

4. Lichtwellenleiterspleißgerät nach einem der vorhergehenden Ansprüche,
**dadurch gekennzeichnet,**
**daß** die Lichtbogen-Glimmentladungsführung (LBF11/12, LBF2, LBF3) aus elektrisch nicht leitenden, thermisch wenig leitendem Material, vorzugsweise aus Keramik oder Quarzglas besteht.

5. Lichtwellenleiterspleißgerät nach einem der vorhergehenden Ansprüche,
**dadurch gekennzeichnet,**
**daß** die Wandstärke der Röhrchen (LBF11, LBF12, LBF2, LBF3) 1 bis 2,5 mm besträgt.

6. Lichtwellenleiterspleißgerät nach einem der vorhergehenden Ansprüche,
**dadurch gekennzeichnet,**
**daß** der Innenduchmesser der Röhrchen (LBF11, LBF12, LBF2, LBF3) dem Außendurchmesser der Elektroden (E1, E2) entsprechend 1 bis 2,5 mm beträgt.

7. Lichtwellenleiterspleißgerät nach einem der vorhergehenden Ansprüche,
**dadurch gekennzeichnet,**
**daß** die Elektroden (E1, E2) aus Wolfram bestehen.

8. Lichtwellenleiterspleißgerät nach einem der vorhergehenden Ansprüche,
**dadurch gekennzeichnet,**
**daß** die Elektroden (E1, E2) an den freien Enden kegelförmig, vorzugsweise unter einem Kegelwinkel (KW) von 30° angeformte Spitzen aufweisen und daß der Abstand (AE) der beiden gegenüberliegenden Spitzen der Elektroden (E1, E2) 0,5 mm bis 10 mm, vorzugsweise 2,5 mm, beträgt.

9. Lichtwellenleiterspleißgerät nach einem der vorhergehenden Ansprüche,
**dadurch gekennzeichnet,**
**daß** der Abstand (AR) der Röhrchen (LBF11, LBF12) bzw, die Aussparung (A2, A3) 1 bis 2 mm, vorzugsweise 1,5 mm beträgt.

10. Lichtwellenleiterspleißgerät nach einem der vorhergehenden Ansprüche,
**dadurch gekennzeichnet,**
**daß** die Glimmentladungsführung (LBF3) aus einem Hohlprofil mit einem Hohlraum (RH) beliebigen, vorzugsweise recheckigen Querschnitts gebildet ist.

11. Lichtwellenleiterspleißgerät nach einem der vorhergehenden Ansprüche,
**dadurch gekennzeichnet,**
**daß** die Aussparung (A2, A3) bzw. der Abstand (AR) zwischen den beiden Röhrchen (LBF11, LBF12) mit einer abnehmbaren Abdeckung (AB1, AB3) versehen ist.

12. Lichtwellenleiterspleißgerät nach Anspruch 11,
**dadurch gekennzeichnet,**
**daß** die Abdeckung (AB1, AB3) Beleuchtungskanäle (BK) und Ausschnitte (AF) für die Einführung der Enden der optischen Fasern (F1, F2) und Ausschnitte (ALB) für die elektrische Glimmentladung (GEG) aufweist.

13. Lichtwellenleiterspleißgerät nach einem der vorhergehenden Ansprüche,
**dadurch gekennzeichnet,**
**daß** die Elektroden (E1, E2) im Material der Glimmentladungsführungen eingebettet oder eingegossen sind.

## Claims

1. Optical waveguide splicer for linking optical fibres in a material fit, with a device for bringing the ends of two fibres (F1, F2) together, a positioning device for the coaxial alignment of the ends of the optical fibres and also with electrodes for producing an electrical glow discharge for the welding of the ends of the optical fibres, in which a glow discharge guide (LBF11/12, LBF2, LBF3) is arranged in the region of the glow discharge (GE, GEG), surrounding the electrodes (E1, E2), **characterized in that** the glow discharge guide (LBF11/12) is formed by two separate tubes (LBF11, LBF12), a tube (LBF11, LBF12) being respectively placed and fixed on each electrode (E1, E2) with an overhang (U) protruding beyond the respective end of the electrode (E1, E2).

2. Optical waveguide splicer for linking optical fibres in a material fit, with a device for bringing the ends of two fibres (F1, F2) together, a positioning device for the coaxial alignment of the ends of the optical fibres and also with electrodes for producing an electrical glow discharge for the welding of the ends of the optical fibres, in which a glow discharge guide (LBF11/12, LBF2, LBF3) is arranged in the region of the glow discharge (GE, GEG), surrounding the electrodes (E1, E2), **characterized in that** the glow discharge guide has a tube, which is divided in the longitudinal direction in such a way that two complementing longitudinal parts are obtained, the lower longitudinal part of the tube being fixed in the optical waveguide splicer and the upper longitudinal part of the tube being able to be placed onto the lower longitudinal part of the tube, preferably in connection with a hinged device of the optical waveguide splicer.

3. Optical waveguide splicer according to one of the preceding claims, **characterized in that** observation channels (BK) are arranged in the glow discharge guide (LBF2, LBF3) for visually monitoring the splicing process in the region of the fibre link.

4. Optical waveguide splicer according to one of the preceding claims, **characterized in that** the arc glow discharge guide (LBF11/12, LBF2, LBF3) consists of electrically nonconducting, thermally poorly conducting material, preferably of ceramic or quartz glass.

5. Optical waveguide splicer according to one of the preceding claims, **characterized in that** the wall thickness of the tubes (LBF11, LBF12, LBF2, LBF3) is 1 to 2.5 mm.

6. Optical waveguide splicer according to one of the preceding claims, **characterized in that** the inside diameter of the tubes (LBF11, LBF12, LBF2, LBF3), corresponding to the outside diameter of the electrodes (E1, E2) is 1 to 2.5 mm.

7. Optical waveguide splicer according to one of the preceding claims, **characterized in that** the electrodes (E1, E2) consist of tungsten.

8. Optical waveguide splicer according to one of the preceding claims, **characterized in that** the electrodes (E1, E2) have at the free ends tips that are formed on conically, preferably at a cone angle (KW) of 30°, and **in that** the distance (AE) between the two opposite tips of the electrodes (E1, E2) is 0.5 mm to 10 mm, preferably 2.5 mm.

9. Optical waveguide splicer according to one of the preceding claims, **characterized in that** the distance (AR) between the tubes (LBF11, LBF12) or the clearance (A2, A3) is 1 to 2 mm, preferably 1.5 mm.

10. Optical waveguide splicer according to one of the preceding claims, **characterized in that** the glow discharge guide (LBF3) is formed by a hollow profile with a cavity (RH) of any desired, preferably rectangular, cross section.

11. Optical waveguide splicer according to one of the preceding claims, **characterized in that** the clearance (A2, A3) or the distance (AR) between the two tubes (LBF11, LBF12) is provided with a removable covering (AB1, AB3).

12. Optical waveguide splicer according to Claim 11, **characterized in that** the covering (AB1, AB3) has illuminating channels (BK) and cutouts (AF) for the insertion of the ends of the optical fibres (F1, F2) and cutouts (ALB) for the electrical glow discharge (GEG).

13. Optical waveguide splicer according to one of the preceding claims, **characterized in that** the electrodes (E1, E2) are embedded or cast in the material of the glow discharge guides.

## Revendications

1. Appareil d'épissurage pour guides d'ondes optiques, pour le raccordement de fibres optiques par liaison de matière, comportant un équipement pour rapprocher les extrémités de deux fibres (F1, F2), un équipement de positionnement pour aligner coaxialement les extrémités des fibres optiques, et des électrodes pour produire une décharge luminescente électrique pour le soudage des extrémités des fibres optiques, dans lequel un guide (LBF11/12, LBF2, LBF3) de décharge luminescente est disposé autour des électrodes (E1, E2) dans la région de la décharge (GE, GEG) luminescente, **caractérisé en ce que** le guide (LBF11/12) de décharge luminescente est formé par deux tubes (LBF11, LBF12) capillaires séparés, un tube (LBF11, LBF12) capillaire respectif étant monté et immobilisé sur chaque électrode (E1, E2) en dépassant de l'extrémité respective de l'électrode (E1, E2) par un porte-à-faux (U).

2. Appareil d'épissurage pour guides d'ondes optiques, pour le raccordement de fibres optiques par liaison de matière, comportant un équipement pour rapprocher les extrémités de deux fibres (F1, F2), un équipement de positionnement pour aligner coaxialement les extrémités des fibres optiques, et des électrodes pour produire une décharge luminescente électrique pour le soudage des extrémités des fibres optiques, dans lequel un guide (LBF11/12, LBF2, LBF3) de décharge luminescente est disposé autour des électrodes (E1, E2) dans la région de la décharge (GE, GEG) luminescente, **caractérisé en ce que** le guide de décharge luminescente comporte un tube capillaire qui est divisé en direction longitudinale de telle sorte qu'on obtient deux parties longitudinales complémentaires, la partie longitudinale inférieure du tube capillaire étant immobilisée dans l'appareil d'épissurage pour guides d'ondes optiques et la partie longitudinale supérieure du tube capillaire pouvant être montée, de préférence conjointement avec un dispositif de rabattement de l'appareil d'épissurage pour guides d'ondes optiques, sur la partie longitudinale inférieure du tube capillaire.

3. Appareil d'épissurage pour guides d'ondes optiques suivant l'une des revendications précédentes, **caractérisé en ce que** des canaux (BK) d'observation sont disposés dans le guide (LBF2, LBF3) de décharge luminescente pour la surveillance optique du processus d'épissurage dans la région du point de liaison des fibres.

4. Appareil d'épissurage pour guides d'ondes optiques suivant l'une des revendications précédentes, **caractérisé en ce que** le guide (LBF11/12, LBF2, LBF3) de décharge luminescente d'arc électrique est constitué d'un matériau électriquement non conducteur et thermiquement peu conducteur, de préférence de matériau céramique-ou de verre quartzeux.

5. Appareil d'épissurage pour guides d'ondes optiques suivant l'une des revendications précédentes, **caractérisé en ce que** l'épaisseur de paroi des tubes (LBF11, LBF12, LBF2, LBF3) capillaires est de 1 à 2,5 mm.

6. Appareil d'épissurage pour guides d'ondes optiques suivant l'une des revendications précédentes, **caractérisé en ce que** le diamètre intérieur des tubes (LBF11, LBF12, LBF2, LBF3) capillaires est, d'une manière correspondante au diamètre extérieur des électrodes (E1, E2), de 1 à 2,5 mm.

7. Appareil d'épissurage pour guides d'ondes optiques suivant l'une des revendications précédentes, **caractérisé en ce que** les électrodes (E1, E2) sont réalisées en tungstène.

8. Appareil d'épissurage pour guides d'ondes optiques suivant l'une des revendications précédentes, **caractérisé en ce que** les électrodes (E1, E2) comportent à leurs extrémités libres des pointes formées coniquement, de préférence sous un angle (KW) de cône de 30°, et **en ce que** la distance (AE) entre les deux pointes opposées des électrodes (E1, E2) est de 0,5 mm à 10 mm, de préférence de 2,5 mm.

9. Appareil d'épissurage pour guides d'ondes optiques suivant l'une des revendications précédentes, **caractérisé en ce que** la distance (AR) entre les tubes (LBF11, LBF12) capillaires, ou encore l'évidement (A2, A3), est d'une taille de 1 à 2 mm, de préférence de 1,5 mm.

10. Appareil d'épissurage pour guides d'ondes optiques suivant l'une des revendications précédentes, **caractérisé en ce que** le guide (LBF3) de décharge luminescente est constitué d'un profilé creux ayant une cavité (RH) de section quelconque, de préférence rectangulaire.

11. Appareil d'épissurage pour guides d'ondes optiques suivant l'une des revendications précédentes, **caractérisé en ce que** l'évidement (A2, A3), ou encore la distance entre les deux tubes (LBF11, LBF12) capillaires, est pourvu(e) d'un élément (AB1, AB3) de recouvrement amovible.

12. Appareil d'épissurage pour guides d'ondes optiques suivant la revendication 11, **caractérisé en ce que** l'élément (AB1, AB3) de recouvrement comporte des canaux (BK) d'éclairage, des découpures (AF) pour l'introduction des extrémités des fibres (F1, F2) optiques, et des découpures (ALB) pour la décharge (GEG) luminescente électrique.

13. Appareil d'épissurage pour guides d'ondes optiques suivant l'une des revendications précédentes, **caractérisé en ce que** les électrodes (E1, E2) sont enrobées ou coulées dans le matériau des guides de décharge luminescente.
